# FASCICULE DE BREVET EUROPEEN

(11) **EP 2 218 497 B1**
(45) Date de publication et mention de la délivrance du brevet: **25.01.2012**
(21) Numéro de dépôt: 10356010.8
(22) Date de dépôt: 17.02.2010
(51) Int. Cl.: B01J 2/20, B30B 11/20, B30B 11/24

(54) **Dispositif de production de granulés pour presse de trituration de graines oléagineuses à vis continue**
Vorrichtung zum Herstellen von Granulat für eine Schneckenpresse zum Zerquetschen öligen Getreides
Apparatus for the production of pellets for a continuous screw press triturating oleous seeds

(30) Priorité: 17.02.2009 FR 0900707
(43) Date de publication de la demande: 18.08.2010
(73) Titulaire: La mécanique moderne, 62223 Fleuchy (FR)
(72) Inventeur: Bielawski, Eric, 62760 Halloy (FR)
(74) Mandataire: Schmitt, John

(56) Documents cités:
- BE-A- 523 465
- FR-A1- 2 907 708
- GB-A- 2 053 788
- JP-A- 11 216 596
- US-A- 3 517 488
- DATABASE WPI Section PQ, Week 198645 Thomson Scientific, London, GB; Class P71, AN 1986-296845 XP002545754 -& SU 1 197 592 A1 15 décembre 1985 (1985-12-15)

## Description

La présente invention est relative à un dispositif de production en continu de granulés ou pellets agencé sur la cage garnie de barreaux et à la sortie d'une presse de trituration de graines oléagineuses à vis continue.

Le procédé de trituration par vis d'Archimède permet d'obtenir, à partir d'une alimentation continue en graines oléagineuses, une extraction mécanique d'huile en phase liquide, le plus souvent au travers d'une cage à barreaux, et une fraction solide de tourteaux sous forme d'écailles ou en sortie de presse au travers d'un manchon terminal et d'un cône.

Dans ce type de presse à vis d'Archimède continue, les tourteaux sortent du manchon terminal sous forme de « chips » ou écailles, c'est-à-dire de plaquettes de plus ou moins grande longueur en fonction des caractéristiques du produit pressé et des conditions de trituration.

Dans le cas d'une production de tourteaux sous forme de pellets, c'est-à-dire de granulés de forme cylindrique et de faible longueur, il est nécessaire de prévoir soit après la presse à vis continue une autre machine indépendante, soit à la sortie de la presse à vis continue la fixation d'un dispositif de production assurant la transformation du profil des tourteaux, dont la forme est plus adaptée à l'alimentation animale, à l'épandage ou à la combustion en chaudière à des fins de récupération d'énergie à partir de la biomasse.

La solution d'adapter et de fixer à la sortie d'une presse à vis continue un dispositif de production assurant la transformation du profil des tourteaux a déjà été réalisé par le demandeur et protégée dans un brevet FR 2 907 708.

Le dispositif de production suivant la présente invention a pour objet de perfectionner et d'améliorer la production des tourteaux sous forme de pellets, en assurant d'une première part une étanchéité du pressât, d'une seconde part l'avancement du tourteau dans le manchon terminal jusqu'à sa sortie et d'une troisième part le fractionnement des tourteaux en petits bouts de granulés.

Le dispositif de production suivant la présente invention est agencé à la sortie d'une presse à vis continue afin de permettre la production de tourteaux sous forme de pellets, c'est-à-dire des granulés de forme cylindrique et de faible longueur.

Le dispositif mécanique se caractérise par la mise sous pression du tourteau en sortie de presse grâce à la rotation d'un ou plusieurs secteurs cylindriques de diamètre égal à celui du diamètre extérieur du manchon terminal, et du même nombre d'évidements compris entre les secteurs cylindriques, à l'intérieur d'une chambre délimitée radialement par un collier de bridage et un porte-filière, et axialement par un couvercle, la matière sortant en périphérie par des filières amovibles.

Le dispositif de production suivant la présente invention comporte :
- un manchon cylindrique extrudeur entraîné en rotation par un arbre d'entraînement portant la vis continue de la presse et permettant la mise sous pression du tourteau grâce à la rotation de gorges hélicoïdales se terminant chacune par une gorge de poussée,
- un collier de bridage solidaire de la cage garnie de barreaux de la presse,
- un porte-filière comprenant en face des gorges de poussée du manchon cylindrique extrudeur au moins une filière amovible étanche percée d'un trou débouchant aux deux extrémités et dont l'entrée est conique,
- et un couvercle qui est d'une part traversé par l'arbre d'entraînement de la presse de trituration et d'autre part fixé par l'intermédiaire d'une couronne sur le porte-filière, ladite couronne étant pourvue d'un dispositif d'étanchéité fixe permettant d'assurer une étanchéité au niveau du pressât de la presse de trituration.

Le dispositif de production suivant la présente invention comporte des gorges hélicoïdales et des gorges de poussée qui présentent un fond à profil arrondi de même rayon.

Le dispositif de production suivant la présente invention comporte des filières qui sont prévues amovibles grâce à un dispositif à plaque fixé par l'intermédiaire de vis dans le porte-filière.

Le dispositif de production suivant la présente invention comporte sur chaque filière un joint d'étanchéité permettant de contenir l'huile provenant de la compression de graines oléagineuses à l'intérieur dudit dispositif de production.

Le dispositif de production suivant la présente invention comporte un dispositif d'étanchéité qui est constitué d'une bague d'étanchéité interchangeable venant d'une part entre la couronne et l'arbre d'entraînement et d'autre part contre le manchon cylindrique extrudeur entraîné en rotation.

Le dispositif de production suivant la présente invention comporte une bague d'étanchéité interchangeable qui est maintenue en pression contre le manchon cylindrique extrudeur par l'intermédiaire d'une entretoise de poussée fixée dans la couronne solidaire du porte-filière au moyen de tiges filetées chargées chacune par un ressort de pression.

Le dispositif de production suivant la présente invention comporte un brise-granulés unique qui est constitué d'une couronne tronçonique réglable en translation sur le pourtour du porte-filière et du collier de bridage.

Le dispositif de production suivant la présente invention comprend une couronne tronçonique comportant un déflecteur incliné qui s'étend au-dessus de chaque trou débouchant des filières du porte-filière.

Le dispositif de production suivant la présente invention comprend un porte-filière comportant en plus des filières une ou plusieurs rangées complémentaires de filières amovibles.

Le dispositif de production suivant la présente invention comporte sur chaque rangée de filières un nombre différent de filières en fonction du nombre de gorges de poussée réalisé sur le manchon extrudeur.

Le dispositif de production suivant la présente invention comporte sur chaque filière un trou débouchant qui peut être de profil interne conique ou tronconique ou courbe, c'est-à-dire suivant un profil en forme de trompette entre l'entrée et la sortie dudit trou.

Le dispositif de production suivant la présente invention comprend un dispositif d'étanchéité comportant une rondelle complémentaire qui est disposée entre la bague d'étanchéité interchangeable et le manchon cylindrique extrudeur.

La description qui va suivre en regard des dessins annexés, donnés à titre d'exemples non limitatifs, permettra de mieux comprendre l'invention, les caractéristiques qu'elle présente et les avantages qu'elle est susceptible de procurer :
Figure 1 est une vue en coupe illustrant une presse de trituration de graines oléagineuses à vis continue comportant dans son prolongement un dispositif de production assurant la transformation du profil des tourteaux suivant la présente invention.
Figure 2 est une vue en perspective représentant le dispositif de production assurant la transformation du profil des tourteaux suivant la présente invention.
Figures 3 et 4 sont des vues en coupe montrant en détail le dispositif de production assurant la transformation du profil des tourteaux suivant la présente invention.
Figure 5 est une vue illustrant des variantes apportées au dispositif de production assurant la transformation du profil des tourteaux suivant la présente invention.

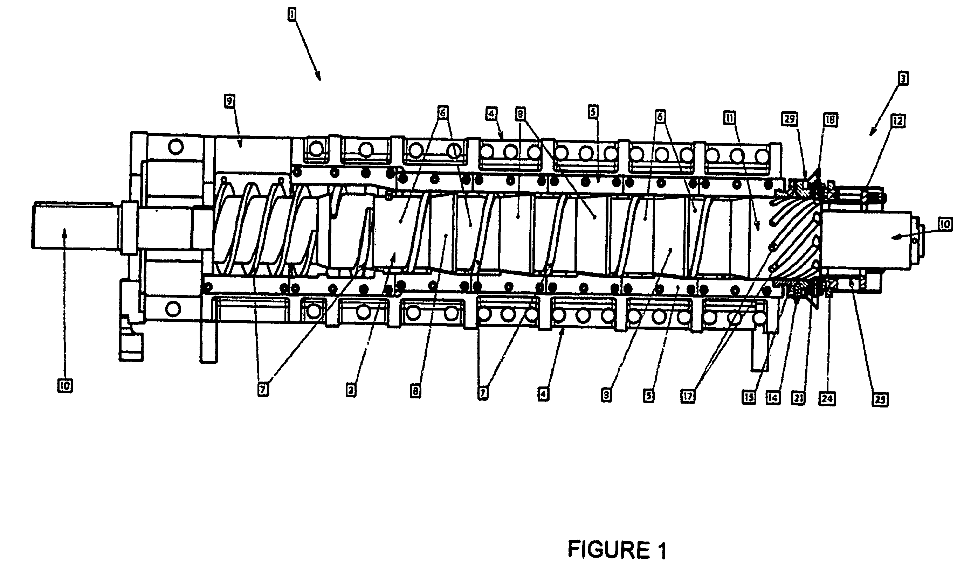

On a montré en figure 1 une presse 1 à vis continue 2 pour la trituration de graines oléagineuses comportant dans le prolongement de ladite vis un dispositif de production 3 assurant la transformation du profil des tourteaux sous forme de pellets, c'est-à-dire de granulés de forme cylindrique et de faible longueur.

La presse de trituration 1 comporte un bâti fixe non représenté dans lequel est retenue une cage 4 garnie de barreaux non représentés, eux-mêmes maintenus en place par des couteaux 5 dans lequel est guidé axialement un arbre d'entraînement 10 sur lequel est montée la vis continue ou d'Archimède 2.

La vis continue 2 comporte des secteurs cylindriques 6 de diamètres différents solidaires chacun d'un profil hélicoïdal 7. La vis continue 2 peut comporter, entre chaque secteur cylindrique 6, un secteur conique 8 de diamètre et d'inclinaison différente.

La cage 4 comporte une ouverture supérieure 9 permettant le chargement en continu des graines oléagineuses à l'intérieur de la presse de trituration 1 et dont le sens de circulation F est imposé par le sens de rotation de la vis continue 2 et des profils hélicoïdaux 7 de chaque secteur cylindrique 6.

Ainsi, la presse de trituration 1 permet d'obtenir, à partir d'une alimentation continue en graines oléagineuses, une extraction mécanique d'huile en phase liquide, le plus souvent au travers de la cage 4 garnie de barreaux, et une fraction solide de tourteaux sous forme d'écailles en sortie de presse au travers du dispositif de production 3.

La presse de trituration 1 est généralement réglée et ajustée afin que la pression de matière à l'intérieur de ladite presse présente le meilleur compromis débit-déshuilage, mais également épaisseur et texture des écailles.

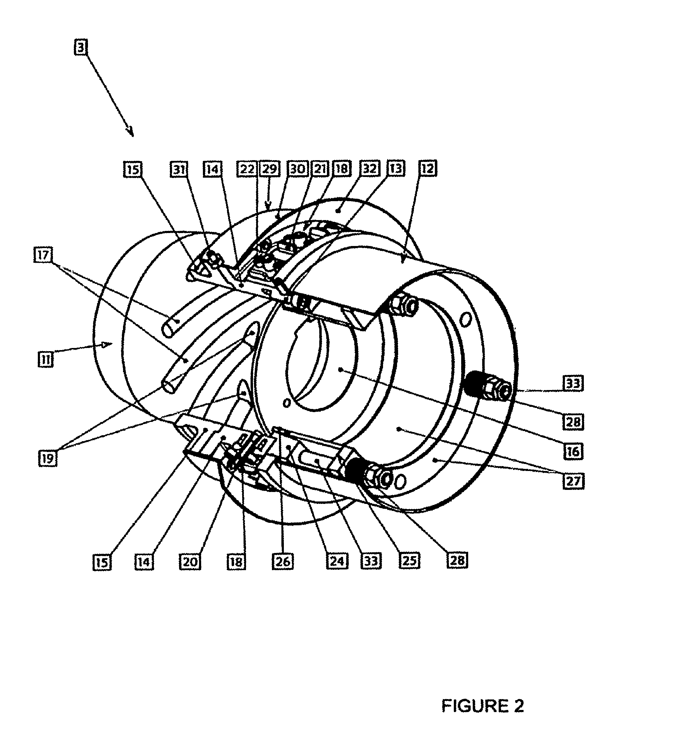

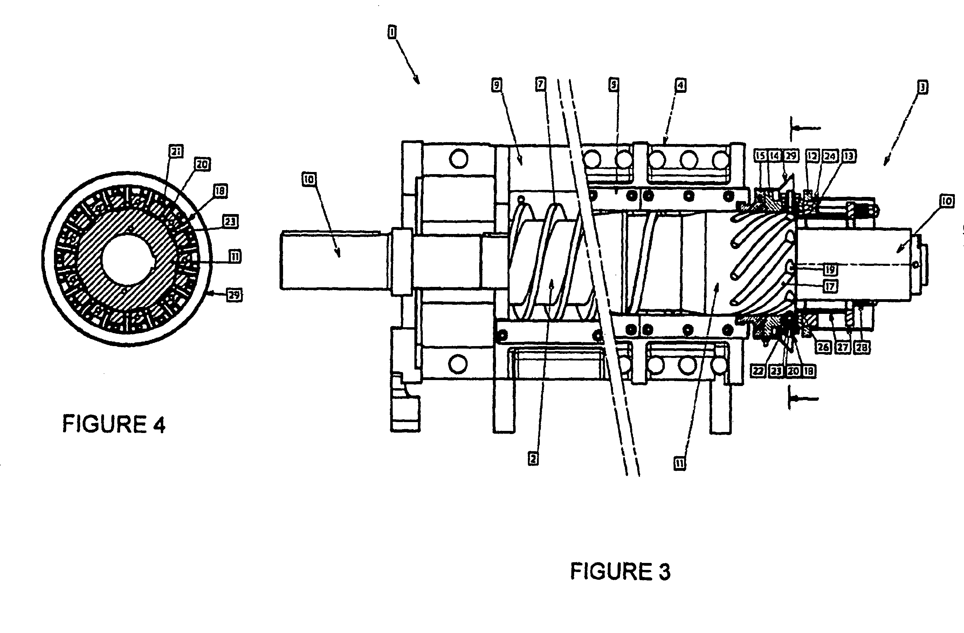

On a montré en figures 2 et 3 un dispositif de production 3 qui est constitué dans le prolongement de la vis continue 2 d'un manchon cylindrique extrudeur 11 monté sur l'arbre d'entraînement 10 afin d'être entraîné dans le même sens de rotation que ladite vis.

Le dispositif de production 3 comporte un couvercle 12 qui est d'une part traversé par l'arbre d'entraînement 10 de la presse de trituration 1 et d'autre part fixé par l'intermédiaire d'une couronne étanche 24 et de vis 13 sur un porte-filière 14.

Le porte-filière 14 est coaxial à l'arbre d'entraînement 10 de la presse de trituration 1 et il est maintenu en position radiale par un collier de bridage 15 qui coopère avec la cage 4 garnie de barreaux de la presse de trituration 1 lorsque cette dernière est amenée en position de fermeture.

La retenue du collier de bridage 15 solidairement à la cage 4 garnie de barreaux permet d'immobiliser en translation et en rotation autour du manchon cylindrique extrudeur 11 et l'arbre d'entraînement 10 le couvercle 12 solidaire de sa couronne 24 et le porte-filière 14.

La retenue du collier de bridage 15 sur la cage 4 peut être également réalisée après la fermeture de cette dernière par un agencement de vis reliant ledit collier 15 à ladite cage 4.

Selon la configuration de certaines presses de trituration 1 il est également prévu de relier le collier de bridage 15 au bâti de ladite presse.

Le manchon extrudeur 11 comporte un alésage interne 16 comportant des moyens de liaison venant coopérer avec l'arbre d'entraînement 10 de la presse de trituration 1.

Le manchon extrudeur 11 comporte sur sa face externe des gorges hélicoïdales 17 permettant d'acheminer le tourteau provenant de la vis continue 2 en direction de filières 18 montées sur le pourtour du porte-filière 14.

Les gorges hélicoïdales 17 débouchent chacune à l'intérieur d'une gorge de poussée 19 ménagée dans le manchon extrudeur 11 et en vis à vis de chaque filière 18 solidaire du porte-filière 14. En effet, en face des gorges de poussées 19 se trouvent un certain nombre de filières amovibles 18, elles-mêmes positionnées radialement sur le porte-filière 14.

Les gorges hélicoïdales 17 et les gorges de poussée 19 présentent un fond à profil arrondi de même rayon pour faciliter l'avancement du tourteau en direction de chaque filière 18 et donc d'éviter le bourrage dudit tourteau dans lesdites gorges.

Les filières 18 sont percées d'un trou 20 débouchant aux deux extrémités, et dont l'une au moins et plus particulièrement celle se trouvant en face de la gorge de poussée 19 forme une entrée à profil conique.

Les filières 18 montées sur le porte-filière 14 sont prévues amovibles grâce à un dispositif à plaque 21 fixé par l'intermédiaire de vis 22 dans le porte-filière 14.

Chaque filière 18 est pourvue d'un joint d'étanchéité 23 permettant de contenir l'huile provenant de la compression de graines oléagineuses à l'intérieur la presse de trituration 1 et du dispositif de production 3.

Ainsi, le nombre de filières 18 et le diamètre interne du trou débouchant 20 qui laisse le passage du tourteau peuvent varier en fonction du réglage et de l'ajustement de la presse de trituration 1.

On peut en effet remplacer certaines filières 18 par un simple bouchon, ce qui laisse la possibilité de régler et d'ajuster le fonctionnement de la presse de trituration 1 afin d'obtenir la pression de matière à l'intérieur de ladite presse qui présente le meilleur compromis débit-déshuilage, mais également forme et texture des pellets.

La couronne 24 du couvercle 12 du dispositif de production 3 est montée en bout du manchon cylindrique extrudeur 11 et autour de l'arbre d'entraînement 10 en association avec un dispositif d'étanchéité 25 permettant d'assurer une étanchéité au niveau du pressât de la presse de trituration 1.

Le dispositif d'étanchéité 25 est constitué d'une bague d'étanchéité interchangeable 26 venant d'une part entre la couronne 24 et l'arbre d'entraînement 10 et d'autre part contre le manchon cylindrique extrudeur 11.

La bague d'étanchéité interchangeable 26 est maintenue en pression constante contre le manchon cylindrique extrudeur 11 par l'intermédiaire d'une entretoise de poussée 27 fixée dans la couronne 24 solidaire du porte-filière 14 au moyen de tiges filetées 33 chargées élastiquement par un ressort 28.

L'entretoise de poussée 27 et le ressort 28 permettent de rattraper l'usure de la bague 26 provenant du frottement entre ladite bague qui est fixe et le manchon cylindrique extrudeur 11 qui est entraîné en rotation par l'arbre d'entraînement 10 de la presse de trituration 1.

Le dispositif de production 3 comporte un brise-granulés unique 29 qui est constitué d'une couronne tronçonique 30 fixée par des vis 31 sur le pourtour du porte-filière 14 et du collier de bridage 15. La couronne tronçonique 30 comporte un déflecteur incliné 32 qui s'étend au-dessus de chaque trou débouchant 20 des filières 18.

La couronne 30 est prévue réglable en translation sur le porte-filière 14 et le collier de bridage 15 de manière à positionner le déflecteur incliné 32 dans différentes positions au-dessus des filières 18, c'est à dire plus ou moins proche des trous débouchants 20.

L'inclinaison, la longueur, et la position du déflecteur 32 de la couronne 30 par rapport aux trous débouchants 20 des filières 18 permet, lors de l'extraction des tourteaux en forme de pellets de chaque filière 18, de briser lesdits pellets ou tourteaux en forme de granulés de plus ou moins grande longueur.

Le dispositif de production 3 suivant la présente invention est entièrement démontable permettant à la presse de trituration 1 d'être modifiée pour revenir dans sa configuration d'origine pour l'extraction d'écailles en plaquettes.

Le fonctionnement du dispositif de production 3 suivant la présente invention se comprend aisément de la description qui précède.

En effet la matière non entièrement déshuilée dans la cage 4 garnie de barreaux au cours du procédé de trituration de la presse 1, est acheminée jusqu'à l'entrée du manchon extrudeur 11.

Cette matière est poussée axialement par le travail de compression de la vis continue 2 de la presse 1 pour qu'il pénètre dans l'espace disponible réalisé par les gorges hélicoïdales 17 du manchon extrudeur 11 également en rotation et entre les parties cylindriques du manchon extrudeur 11 et du collier de bridage 15, puis du porte-filière 14.

En bout de manchon extrudeur 11, les gorges de poussée 19 compriment la matière provoquant une surpression entre lesdites gorges et le porte-filière 14 fixe. Cette surpression force la matière à s'échapper par les trous débouchants 20 des filières radiales 18 du porte-filière 14 qui sont positionnées en face des gorges de poussée 19.

La matière qui sort des filières 18 est ensuite brisée par la couronne tronconique 30 pour que les tourteaux se cassent en granulés de plus ou moins grande longueur.

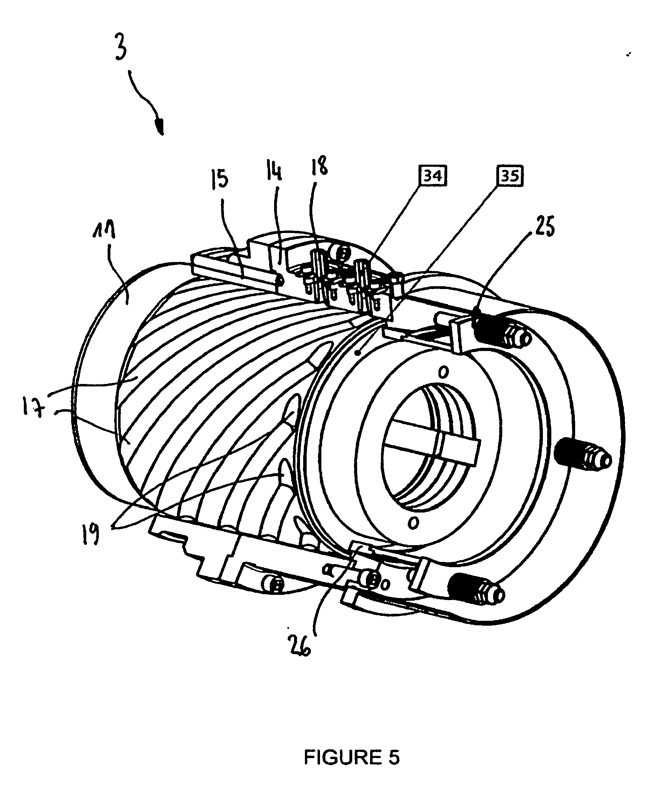

La Figure 5 représente une variante du dispositif de production 3 assurant la transformation du profil des tourteaux suivant la présente invention et plus particulièrement de son porte filière 14 et de son dispositif d'étanchéité 25.

Ainsi le porte-filière 14 comporte en plus des filières 18 une ou plusieurs rangées de filières amovibles 34 identiques à celles 18 complémentaires disposées en face des gorges de poussée 19 prévues à cet effet.

Le nombre et la position axiale des gorges de poussée 19 dépend du nombre et de la position axiale des filières 18, 34 sur le porte-filière 14.

Enfin, chaque rangée de filières peut comporter un nombre différent de filières 18, 34 en fonction du nombre de gorges de poussée 19 réalisé sur le manchon extrudeur 11.
Chaque filière 18, 34 comporte un trou débouchant 20 qui peut être de profil interne conique, tronconique ou courbe, c'est-à-dire un profil en forme de trompette entre l'entrée et la sortie dudit trou 20.

En ce qui concerne le dispositif d'étanchéité 25, ce dernier comporte une rondelle complémentaire 35 qui est disposée entre la bague d'étanchéité interchangeable 26 et le manchon cylindrique extrudeur 11.

La rondelle complémentaire est maintenue en pression constante contre la face du manchon 11 au moyen du même agencement que celui prévu pour la bague d'étanchéité 26 et notamment par l'intermédiaire de l'entretoise de poussée 27 fixée dans la couronne 24 solidaire du porte-filière 14 au moyen de tiges filetées 33 chargées élastiquement par un ressort 28.

La rondelle complémentaire 35 permet d'éviter l'usure de la face du manchon cylindrique 11.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tout autre équivalent dans le cadre des revendications annexées.

## Revendications

1. Dispositif de production en continu de tourteaux en forme de granulés ou pellets agencé sur la cage (4) garnie de barreaux et à la sortie d'une presse de trituration (1) de graines oléagineuses à vis continue (2), **caractérisé en ce qu'**il comprend un manchon cylindrique extrudeur (11) entraîné en rotation par un arbre d'entraînement (10) portant la vis continue (2) de la presse et permettant la mise sous pression du tourteau grâce à la rotation de gorges hélicoïdales (17) se terminant chacune par une gorge de poussée (19), un collier de bridage (15) solidaire de la cage (4) garnie de barreaux de la presse (1), un porte-filière (14) comprenant en face des gorges de poussée (19) du manchon cylindrique extrudeur (11) au moins une filière amovible étanche (18, 34) percée d'un trou (20) débouchant aux deux extrémités et dont l'entrée est conique, et un couvercle (12) qui est d'une part traversé par l'arbre d'entraînement (10) de la presse de trituration (1) et d'autre part fixé par l'intermédiaire d'une couronne (24) sur le porte-filière (14), ladite couronne étant pourvue d'un dispositif d'étanchéité (25) fixe permettant d'assurer une étanchéité au niveau du pressât de la presse de trituration (1).

2. Dispositif de production suivant la revendication 1, **caractérisé en ce que** les gorges hélicoïdales (17) et les gorges de poussée (19) présentent un fond à profil arrondi de même rayon.

3. Dispositif de production suivant la revendication 1, **caractérisé en ce que** les filières (18) sont prévues amovibles grâce à un dispositif à plaque (21) fixé par l'intermédiaire de vis (22) dans le porte-filière (14).

4. Dispositif de production suivant la revendication 1, **caractérisé en ce que** chaque filière (18) est pourvue d'un joint d'étanchéité (23) permettant de contenir l'huile provenant de la compression de graines oléagineuses à l'intérieur dudit dispositif de production (3).

5. Dispositif de production suivant la revendication 1, **caractérisé en ce que** le dispositif d'étanchéité (25) est constitué d'une bague d'étanchéité interchangeable (26) venant d'une part entre la couronne (24) et l'arbre d'entraînement (10) et d'autre part contre le manchon cylindrique extrudeur (11) entraîné en rotation.

6. Dispositif de production suivant la revendication 5, **caractérisé en ce que** la bague d'étanchéité interchangeable (26) est maintenue en pression contre le manchon cylindrique extrudeur (11) par l'intermédiaire d'une entretoise de poussée (27) fixée dans la couronne (24) solidaire du porte-filière (14) au moyen de tiges filetées (33) chargées chacune par un ressort de pression (28).

7. Dispositif de production suivant la revendication 1, **caractérisé en ce qu'**il comporte un brise-granulés unique (29) constitué d'une couronne tronçonique (30) réglable en translation sur le pourtour du porte-filière (14) et du collier de bridage (15).

8. Dispositif de production suivant la revendication 7, **caractérisé en ce que** la couronne tronçonique (30) comporte un déflecteur incliné (32) qui s'étend au-dessus de chaque trou débouchant (20) des filières (18) du porte-filière (14).

9. Dispositif de production suivant la revendication 1, **caractérisé en ce que** le porte-filière (14) comporte en plus des filières (18) une ou plusieurs rangées complémentaires de filières amovibles (34).

10. Dispositif de production suivant la revendication 9, **caractérisé en ce que** chaque rangée de filières (34) peut comporter un nombre différent de filières en fonction du nombre de gorges de poussée (19) réalisé sur le manchon extrudeur (11).

11. Dispositif de production suivant la revendication 1, **caractérisé en ce que** chaque filière (18, 34) comporte un trou débouchant (20) qui peut être de profil interne conique ou tronconique ou courbe, c'est-à-dire suivant un profil en forme de trompette entre l'entrée et la sortie dudit trou (20).

12. Dispositif de production suivant la revendication 5, **caractérisé en ce que** le dispositif d'étanchéité (25) comporte une rondelle complémentaire (35) qui est disposée entre la bague d'étanchéité interchangeable (26) et le manchon cylindrique extrudeur (11).

## Claims

1. Device for the continuous production of oilcake in granular or pellet form disposed on the bar cage (4) at the outlet of a continuous oilseed screw (2) grinding press (1), **characterized in that** it comprises a cylindrical extrusion sleeve (11) driven in rotation by a drive shaft (10) carrying the continuous screw (2) of the press and enabling pressurization of the oilcake thanks to the rotation of helical grooves (17) each terminating in a pusher groove (19), a clamping collar (15) rigidly fastened to the bar cage (4) of the press (1), a die-carrier (14) comprising opposite the pusher grooves (19) of the cylindrical extrusion sleeve (11) at least one sealed removable die (18, 34) pierced by a hole (20) open at both ends and the entry of which is conical, and a cover (12) which on the one hand has the drive shaft (10) of the grinding press (1) pass through it and on the other hand is fixed by means of a ring (24) to the die-carrier (14), said ring being provided with a fixed sealing device (25) enabling a seal to be provided at the level of the pressate of the grinding press (1).

2. Production device according to Claim 1, **characterized in that** the helical grooves (17) and the pusher grooves (19) have a rounded profile bottom of the same radius.

3. Production device according to Claim 1, **characterized in that** the dies (18) are rendered removable thanks to a plate device (21) fixed by screws (22) in the die-carrier (14).

4. Production device according to Claim 1, **characterized in that** each die (18) is provided with a seal (23) enabling containment of the oil resulting from compression of the oilseed inside said production device (3).

5. Production device according to Claim 1, **characterized in that** the sealing device (25) is constituted of an interchangeable sealing ring (26) disposed on the one hand between the ring (24) and the drive shaft (10) and on the other hand against the cylindrical extrusion sleeve (11) driven in rotation.

6. Production device according to Claim 5, **characterized in that** the interchangeable sealing ring (26) is held pressed against the cylindrical extrusion sleeve (11) by means of a thrust spacer sleeve (27) fixed in the ring (24) rigidly fastened to the die-carrier (14) by means of threaded rods (33) each spring-loaded by a pressure spring (28).

7. Production device according to Claim 1, **characterized in that** it includes a single granule breaker (29) constituted of a frustoconical ring (30) adjustable in translation on the perimeter of the die-carrier (14) and the clamping collar (15).

8. Production device according to Claim 7, **characterized in that** the frustoconical ring (30) includes an inclined deflector (32) that extends above each open-ended hole (20) of the dies (18) of the die-carrier (14).

9. Production device according to Claim 1, **characterized in that** the die-carrier (14) includes in addition to the dies (18) one or more complementary rows of removable dies (34).

10. Production device according to Claim 9, **characterized in that** each row of dies (34) may include a different number of dies as a function of the number of pusher grooves (19) produced on the extrusion sleeve (11).

11. Production device according to Claim 1, **characterized in that** each die (18, 34) includes an open-ended hole (20) that may have a conical or frustoconical or curved internal profile, i.e. a trumpet-shaped profile, between the entry and the exit of said hole (20).

12. Production device according to Claim 5, **characterized in that** the sealing device (25) includes a complementary washer (35) that is disposed between the interchangeable sealing ring (26) and the cylindrical extrusion sleeve (11).

## Patentansprüche

1. Vorrichtung zur fortlaufenden Erzeugung von Ölkuchen in Form von Granulaten oder Presslingen, die auf dem mit Gitterstäben versehenen Käfig (4) und am Ausgang einer Presse (1) zum Zerreiben von Ölsaaten mit einer Schnecke (2) angeordnet ist, **dadurch gekennzeichnet, dass** sie eine Extruder-Zylinderhülse (11), die von einer Antriebswelle (10) in Drehung versetzt wird, die die Schnecke (2) der Presse trägt und die Druckbeaufschlagung des Ölkuchens aufgrund der Drehung von Spiralnuten (17) erlaubt, die je in einer Schubnut (19) enden, einen Flanschring (15), der fest mit dem mit Gitterstäben versehenen Käfig (4) der Presse (1) verbunden ist, einen Düsenhalter (14), der gegenüber den Schubnuten (19) der Extruder-Zylinderhülse (11) mindestens eine dichte entfernbare Düse (18, 34) enthält, die ein Loch (20) aufweist, das an beiden Enden mündet und dessen Eingang kegelförmig ist, und einen Deckel (12) enthält, der einerseits von der Antriebswelle (10) der Zerreibungspresse (1) durchquert wird und andererseits mittels eines Kranzes (24) am Düsenhalter (14) befestigt ist, wobei der Kranz mit einer ortsfesten Dichtungsvorrichtung (25) versehen ist, die es ermöglicht, eine Dichtheit im Bereich des Pressguts der Zerreibungspresse (1) zu gewährleisten.

2. Erzeugungsvorrichtung nach Anspruch 1, **dadurch gekennzeichnet, dass** die Spiralnuten (17) und die Schubnuten (19) einen Boden mit abgerundetem Profil mit gleichem Radius aufweisen.

3. Erzeugungsvorrichtung nach Anspruch 1, **dadurch gekennzeichnet, dass** die Düsen (18) mit Hilfe einer Plattenvorrichtung (21) entfernbar vorgesehen sind, die mittels Schrauben (22) im Düsenhalter (14) befestigt ist.

4. Erzeugungsvorrichtung nach Anspruch 1, **dadurch gekennzeichnet, dass** jede Düse (18) mit einer Dichtung (23) versehen ist, die es ermöglicht, das von der Verdichtung von Ölsaaten stammende Öl im Inneren der Erzeugungsvorrichtung (3) einzuschließen.

5. Erzeugungsvorrichtung nach Anspruch 1, **dadurch gekennzeichnet, dass** die Dichtungsvorrichtung (25) aus einem austauschbaren Dichtring (26) besteht, der einerseits zwischen dem Kranz (24) und der Antriebswelle (10) und andererseits gegen die in Drehung versetzte Extruder-Zylinderhülse (11) in Anlage kommt.

6. Erzeugungsvorrichtung nach Anspruch 5, **dadurch gekennzeichnet, dass** der austauschbare Dichtring (26) gegen die Extruder-Zylinderhülse (11) mit Hilfe eines Schubabstandsstücks (27) unter Druck gehalten wird, das im mit dem Düsenhalter (14) fest verbundenen Kranz (24) mit Hilfe von Gewindestäben (33) befestigt ist, die je von einer Druckfeder (28) beaufschlagt werden.

7. Erzeugungsvorrichtung nach Anspruch 1, **dadurch gekennzeichnet, dass** sie einen einzigen Granulatzerkleinerer (29) aufweist, der aus einem kegelstumpfförmigen Kranz (30) besteht, der auf dem Umfang des Düsenhalters (14) und des Flanschrings (15) in Translationsverschiebung einstellbar ist.

8. Erzeugungsvorrichtung nach Anspruch 7, **dadurch gekennzeichnet, dass** der kegelstumpfförmige Kranz (30) ein geneigtes Ablenkblech (32) aufweist, das sich über jedem Mündungsloch (20) der Düsen (18) des Düsenhalters (14) erstreckt.

9. Erzeugungsvorrichtung nach Anspruch 1, **dadurch gekennzeichnet, dass** der Düsenhalter (14) zusätzlich zu den Düsen (18) eine oder mehrere komplementäre Reihen von entfernbaren Düsen (34) aufweist.

10. Erzeugungsvorrichtung nach Anspruch 9, **dadurch gekennzeichnet, dass** jede Reihe von Düsen (34) eine andere Anzahl von Düsen aufweisen kann, abhängig von der Anzahl von Schubnuten (19), die auf der Extruderhülse (11) ausgebildet sind.

11. Erzeugungsvorrichtung nach Anspruch 1, **dadurch gekennzeichnet, dass** jede Düse (18, 34) ein Mündungsloch (20) aufweist, das ein kegelförmiges oder kegelstumpfförmiges oder gekrümmtes Innenprofil haben kann, d.h. gemäß einem trompetenförmigen Profil zwischen dem Eingang und dem Ausgang des Lochs (20).

12. Erzeugungsvorrichtung nach Anspruch 5, **dadurch gekennzeichnet, dass** die Dichtvorrichtung (25) eine komplementäre Scheibe (35) aufweist, die zwischen dem austauschbaren Dichtring (26) und der Extruder-Zylinderhülse (11) angeordnet ist.
